# DEMANDE DE BREVET EUROPEEN

(11) **EP 0 787 937 A2**
(43) Date de publication de la demande: **06.08.1997**
(21) Numéro de dépôt: 97400201.6
(22) Date de dépôt: 28.01.1997
(51) Int. Cl.: F16L 21/02

(54) **Garniture d'étanchéité pour dispositif d'assemblage d'éléments de tuyauterie et dispositif d'assemblage d'une telle garniture d'étanchéité**

(30) Priorité: 01.02.1996 FR 9601231
(71) Demandeur: PONT-A-MOUSSON S.A., 54000 Nancy (FR)
(72) Inventeur: Barbe, Pierre, Bicqueley 54200 Toul (FR)
(74) Mandataire: Obolensky, Michel

(57) **Abrégé**

Garniture d'étanchéité destinée à être interposée entre l'enveloppe extérieure d'un dispositif d'assemblage bout à bout d'éléments de tuyauterie et lesdits éléments de tuyauterie à assembler, comprenant une manchette (1) en matière élastomère de forme générale cylindrique comportant dans chacune de ses zones d'extrémité un bourrelet d'étanchéité (5), d'épaisseur supérieure à celle de la paroi de la manchette, chaque bourrelet (5) étant destiné à être comprimé entre l'enveloppe extérieure du manchon d'assemblage et l'élément de tuyauterie correspondant engagé dans ledit manchon, caractérisée en ce qu'elle comporte ménagée dans chacune de ses surfaces latérales intérieure et extérieure, une chambre annulaire correspondante (10) d'expansion pour la matière de chaque bourrelet d'étanchéité (5) lors de la compression de celui-ci.

## Description

La présente invention est relative aux dispositifs d'assemblage bout à bout d'éléments de tuyauterie et se rapporte plus particulièrement aux garnitures d'étanchéité utilisées dans de tels dispositifs d'assemblage.

Les dispositifs de raccordement bout à bout d'éléments de tuyauterie comprennent généralement un manchon de raccordement de forme générale cylindrique formé d'une enveloppe extérieure dans laquelle sont ménagées des gorges annulaires intérieures de réception de joints d'étanchéité destinés à coopérer avec les extrémités correspondantes des éléments de tuyauterie à assembler.

L'assemblage du manchon et des éléments de tuyauterie est généralement réalisé par emmanchement à force et nécessite de prévoir aux extrémités des éléments de tuyauterie des chanfreins facilitant l'engagement des éléments de tuyauterie dans le manchon d'assemblage.

L'invention vise à remédier aux inconvénients des dispositifs d'assemblage connus en créant un dispositif d'assemblage d'éléments de tuyauterie qui tout en étant d'une construction relativement simple, permette de réaliser un assemblage à la fois rapide et particulièrement efficace en ce qui concerne l'étanchéité obtenue, sans nécessiter de chanfreins aux extrémités des éléments de tuyauterie lorsque l'enveloppe extérieure est ouverte.

Elle vise également à créer un dispositif d'assemblage qui soit capable de tenir à des pressions conformes aux normes relatives aux canalisations d'assainissement imposées par la législation.

Elle a de plus pour but de créer un dispositif d'assemblage dont les constituants présentent des tolérances importantes en ce qui concerne le diamètre intérieur de l'enveloppe et le diamètre extérieur des tuyaux à assembler.

Elle a donc pour objet une garniture d'étanchéité destinée à être interposée entre l'enveloppe extérieure d'un dispositif d'assemblage bout à bout d'éléments de tuyauterie et lesdits éléments de tuyauterie à assembler, comprenant une manchette en matière élastomère de forme générale cylindrique comportant dans chacune de ses zones d'extrémité un bourrelet d'étanchéité, d'épaisseur supérieure à celle de la paroi de la manchette, chaque bourrelet étant destiné à être comprimé entre l'enveloppe extérieure du manchon d'assemblage et l'élément de tuyauterie correspondant engagé dans ledit manchon, caractérisée en ce qu'elle comporte ménagée dans chacune de ses surfaces latérales intérieure et extérieure une chambre annulaire d'expansion pour la matière de chaque bourrelet d'étanchéité lors de la compression de celui-ci.

L'invention sera mieux comprise à la lecture de la description qui va suivre, donnée uniquement à titre d'exemple et faite en se référant aux dessins annexés, sur lesquels :
- la Fig.1 est une vue en élévation et en coupe d'une garniture d'étanchéité pour manchon d'assemblage suivant l'invention;
- la Fig.2 est une vue partielle en coupe à plus grande échelle montrant en détail de la garniture de la Fig.1;
- la Fig.3 est une vue partielle en coupe montrant la garniture d'étanchéité suivant l'invention comprimée entre l'enveloppe extérieure d'un manchon d'assemblage et un élément de tuyauterie; et
- la Fig.4 est une vue en élévation et en coupe d'un autre mode de réalisation de la garniture d'étanchéité pour manchon d'assemblage suivant l'invention.

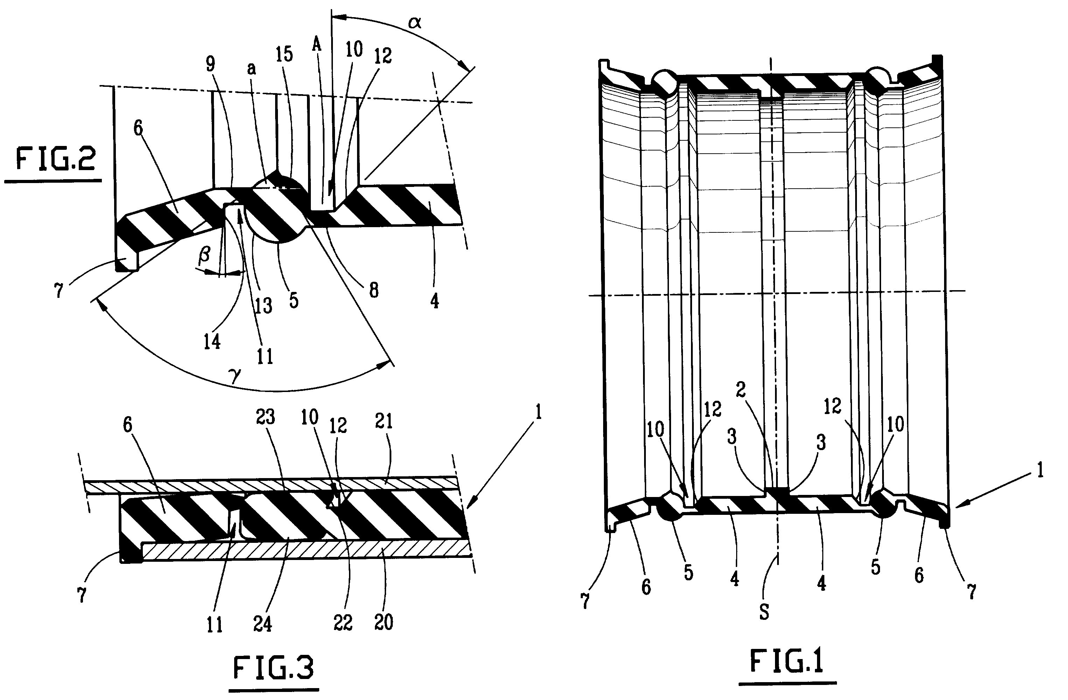

La garniture d'étanchéité représentée à la figure 1 comporte une manchette 1 de forme générale tubulaire cylindrique.

Cette manchette en matériau élastomère est destinée à être montée dans l'enveloppe extérieure d'un manchon d'assemblage bout à bout de deux éléments de tuyauterie. Elle présente de ce fait deux moitiés identiques s'étendant de part et d'autre d'un plan de symétrie matérialisé par la ligne en trait mixte S.

A partir de ce plan de symétrie, on trouve successivement une nervure annulaire 2 s'étendant vers l'intérieur de la manchette 1 et définissant de part et d'autre du plan de symétrie S, des surfaces de butée 3 pour les extrémités des éléments de tuyauterie (non représentés) à assembler à l'aide du dispositif d'assemblage dont la manchette est l'un des constituants.

De part et d'autre de la nervure 2 s'étendent des tronçons cylindriques 4 aux extrémités desquels opposées à la nervure 2, sont prévus des bourrelets toriques correspondants 5 d'épaisseur supérieure à l'épaisseur du reste de la manchette.

Au-delà de chacun des bourrelets toriques 5, la manchette comporte des zones évasées 6 de forme tronconique qui se terminent chacune par une collerette périphérique 7 formant talon de centrage et d'accrochage pour l'enveloppe extérieure ou virole du dispositif d'assemblage. Ces zones évasées 6 facilitent également l'emmanchement à force des éléments de tuyauterie dans le cas d'une virole fermée.

Comme cela apparaît à la figure 2, chaque bourrelet torique 5 est relié d'une part au tronçon cylindrique 4 correspondant de la manchette et d'autre part, à la zone évasée tronconique 6 par des portions de parois respectives 8 et 9 plus minces que le reste de la manchette et qui résultent de la présence de part et d'autre du bourrelet 5 de chambres annulaires 10 et 11 d'expansion pour la matière du bourrelet lors de la compression du bourrelet entre l'enveloppe extérieure du dispositif d'assemblage et l'élément de tuyauterie correspondant, comme on l'expliquera en détail en référence à la figure 3.

La chambre d'expansion 10 tournée vers l'intérieure de la manchette 1 comporte une paroi 12 opposée au bourrelet inclinée d'un angle α de 45° par rapport à un plan normal au fond de cette chambre.

La partie du bourrelet d'étanchéité 5 qui est en surépaisseur par rapport au reste de la paroi de la manchette 1 présente en coupe une surface a inférieure ou égale à la surface libre A de la chambre d'expansion 10.

Cette proportion est également respectée en ce qui concerne la surépaisseur du bourrelet 5 destinée à être absorbée par la chambre d'expansion 11.

La chambre d'expansion 11 tournée vers l'extérieur de la manchette a un profil pratiquement rectangulaire, ses parois latérales 13,14 présentant un léger évasement β de l'ordre de 5° pour chacune d'elles.

Le bourrelet 5 comporte en outre une saillie annulaire 15 dirigée vers l'intérieur ayant un profil en pointe dont les côtés font entre eux un angle γ de 90° par exemple.

Cette saillie est destinée à assurer la concentration de l'appui du bourrelet torique sur l'élément de tuyauterie associé lorsqu'il est comprimé contre cet élément par l'enveloppe extérieure.

Cette saillie intervient plus particulièrement en augmentant localement la pression de contact lorsque le bourrelet 5 est faiblement comprimé, c'est-à-dire lorsque le jeu entre la virole et l'élément de tuyauterie est maximal.

Cette saillie a également pour rôle d'absorber les irrégularités de surface de l'élément de tuyauterie lorsque celui-ci présente une surface externe rugueuse.

Sur la figure 3, on a représenté en coupe partielle un dispositif d'assemblage d'éléments de tuyauterie comprenant une garniture d'étanchéité suivant l'invention.

La garniture d'étanchéité ou manchette 1 est comprimée entre l'enveloppe métallique extérieure ou virole 20 et un tuyau 21.

Le positionnement axial de la virole 20 est assuré par les collerettes ou talons tels que la collerette 7 prévus à chaque extrémité de la manchette.

La compression de la manchette 1 entre la virole 20 et l'élément de tuyauterie 21 obtenue généralement en exerçant sur l'ensemble un effort de compression approprié, soit par emmanchement à force de l'élément de tuyauterie 21 dans une virole fermée, soit par serrage d'une virole fendue autour de l'élément de tuyauterie 21, provoque l'écrasement des bourrelets toriques 5 dont l'épaisseur du fait de cet écrasement devient voisine de l'épaisseur des tronçons cylindriques 4 qui ne sont pas comprimés.

Ces tronçons 4 limitent l'écrasement des bourrelets 5, le désalignement relatif des tuyaux 21 ainsi que la déviation des tuyaux par rapport à la virole.

La matière du bourrelet torique 5 qui, en position non comprimée, se trouve en surépaisseur par rapport au reste de la manchette 1 est refoulée dans les chambres d'expansion 10 et 11 et remplit partiellement ces chambres.

La chambre d'expansion 10 tournée vers l'élément de tuyauterie 21 prend, du fait de l'aplatissement du bourrelet 5, une forme de section à peu près constante dont la paroi constituée par la paroi 22 du bourrelet 5 située en regard de sa paroi inclinée 12 prend à peu près la même inclinaison que celle-ci.

Quant au bourrelet 5 proprement dit, il présente, du fait de son écrasement des faces aplaties 23,24 de contact avec l'élément de tuyauterie 21 et l'enveloppe extérieure 20.

On notera que le taux de compression des bourrelets 5 est compris entre environ 10 et 40% suivant les tolérances diamétrales, c'est-à-dire suivant le jeu entre la virole et l'élément de tuyauterie emmanché.

La paroi inclinée 22 de la chambre d'expansion 10 constitue un élément d'étanchéité supplémentaire en raison du fait que lorsque la canalisation ainsi réalisée est en fonctionnement, la réaction hydraulique de l'eau circulant à l'intérieur de la canalisation vient appuyer le bourrelet torique 5 contre la surface extérieure de l'élément de tuyauterie 21, par action sur cette paroi inclinée 22.

Cette chambre d'expansion 10 participe de façon dynamique à l'étanchéité de l'assemblage lorsqu'un fluide sous pression circule dans la canalisation, augmentant de ce fait les pressions internes admissibles.

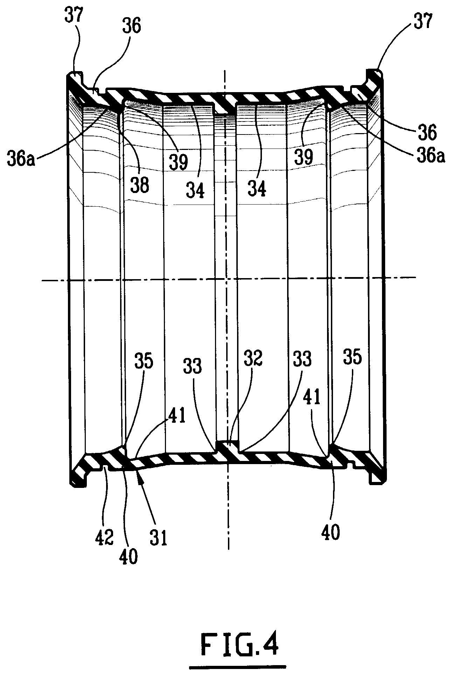

La garniture d'étanchéité représentée à la figure 4 comporte une manchette 31 de forme générale tubulaire cylindrique qui présente comme la manchette 1 de la figure 1, deux moitiés identiques s'étendant de part et d'autre d'une nervure annulaire 32 en saillie vers l'intérieur de la manchette et définissant des surfaces de butée 33 pour les extrémités des éléments de tuyauterie (non représentés) à assembler à l'aide du dispositif d'assemblage dont la manchette est l'un des constituants.

De part et d'autre de la nervure 32 s'étendent des tronçons à peu près cylindriques 34 aux extrémités desquels, opposées à la nervure 32, sont prévus des bourrelets d'étanchéité correspondants 35 d'épaisseur supérieure à l'épaisseur du reste de la manchette.

Au-delà de chacun des bourrelets 35, la manchette comporte des zones évasées 36 de forme à peu près troncônique qui se terminent chacune par une collerette périphérique 37 formant talon de centrage et d'accrochage pour l'enveloppe extérieure ou virole du dispositif d'assemblage.

Chaque bourrelet 35 comporte une lèvre annulaire 38 en saillie vers l'intérieur de la manchette. La lèvre 38 est formée d'une part par l'extrémité intérieure de la surface à peu près tronconique de la zone évasée 36 s'étendant au-delà de chaque bourrelet et formant rampe 36a pour faciliter l'emboîtement d'un tuyau non chanfreiné, et d'autre part, par une surface annulaire 39 de liaison avec le tronçon à peu près cylindrique correspondant 34.

Chaque bourrelet 35 est relié au tronçon à peu près cylindrique 34 correspondant de la manchette par une portion de paroi 40 délimitant une chambre annulaire 41 d'expansion de la matière de la lèvre 38 du bourrelet lors de la compression du bourrelet de la manière expliquée en référence à la figure 3.

Il est relié à la zone évasée à peu près tronconique 36 par une portion de paroi plus mince que le reste de la manchette et qui résulte de la présence d'une chambre annulaire 42 tournée vers l'extérieur d'expansion pour la matière du bourrelet lors de la compression de celui-ci.

La chambre d'expansion 41 tournée vers l'intérieur de la manchette 31 présente un profil lui permettant d'absorber la matière de la lèvre 38 du bourrelet 35 correspondant lors de la compression de ce bourrelet.

Dans le mode de réalisation de la figure 4, le volume d'élastomère supprimé sur la face extérieure des bourrelets et que comportent les bourrelets toriques de la manchette de la figure 1, permet de déséquilibrer la compression des bourrelets de la manchette de la figure 4 au profit de leur portion intérieure, celle-ci étant destinée à assurer l'étanchéité du tuyau emboîté. On priviligie par conséquent l'étanchéité au niveau du tuyau introduit.

Par rapport à l'agencement avec des bourrelets toriques, on aboutit dans le mode de réalisation de la figure 4, à une répartition distincte de la compression, celle-ci étant plus importante vers l'intérieur que vers l'extérieur.

On voit donc que la manchette ou garniture d'étanchéité suivant l'invention permet de réaliser un assemblage bout à bout d'éléments de tuyauterie qui est à la fois précis grâce à la présence de la nervure de butée centrale 2 pour les éléments de tuyauterie et aisé dans la mesure où la continuité de la manchette et de ses organes d'étanchéité permet l'emploi de dispositifs d'assemblage à enveloppe extérieure qui peut présenter un contour ouvert.

Enfin, en raison même de sa construction, la garniture d'étanchéité suivant l'invention permet de réaliser des assemblages d'étanchéité optimale.

## Revendications

1. Garniture d'étanchéité destinée à être interposée entre l'enveloppe extérieure (20) d'un dispositif d'assemblage bout à bout d'éléments de tuyauterie (21) et lesdits éléments de tuyauterie à assembler, comprenant une manchette (1;31) en matière élastomère de forme générale cylindrique comportant dans chacune de ses zones d'extrémité un bourrelet d'étanchéité (5;35), d'épaisseur supérieure à celle de la paroi de la manchette, chaque bourrelet (5;35) étant destiné à être comprimé entre l'enveloppe extérieure (20) du manchon d'assemblage et l'élément de tuyauterie (21) correspondant engagé dans ledit manchon, caractérisée en ce qu'elle comporte ménagée dans chacune de ses surfaces latérales intérieure et extérieure, une chambre annulaire correspondante (10,11; 41,42) d'expansion pour la matière de chaque bourrelet d'étanchéité (5;35) lors de la compression de celui-ci.

2. Garniture d'étanchéité suivant la revendication 1, caractérisée en ce que ladite chambre d'expansion (10;41) de la matière du bourrelet d'étanchéité ménagée dans la paroi intérieure de la manchette est une gorge périphérique contiguë au bourrelet (5;35), tournée vers l'intérieur de la manchette (1;31).

3. Garniture d'étanchéité suivant la revendication 2, caractérisée en ce que la chambre d'expansion (10) est de forme évasée, et comporte une paroi (12) opposée au bourrelet d'étanchéité (5) inclinée par rapport à un plan normal au fond de la dite chambre.

4. Garniture d'étanchéité suivant l'une des revendications 1 à 3, caractérisée en ce que la chambre d'expansion (11;42) ménagée dans la paroi extérieure de la manchette (1;31) est une gorge périphérique contiguë au bourrelet (5;35) tournée vers l'extérieur de la manchette (1;31), et en ce que ladite chambre d'expansion (10;41) tournée vers l'intérieur et la chambre d'expansion (11;42) tournée vers l'extérieur de la manchette, sont ménagées dans la paroi de la manchette de part et d'autre de chacun des bourrelets d'étanchéité (5;35).

5. Garniture d'étanchéité suivant la revendication 4, caractérisée en ce que la chambre d'expansion (11) tournée vers l'extérieur de la manchette présente un profil pratiquement rectangulaire avec un léger évasement (β) de ses parois latérales.

6. Garniture d'étanchéité suivant l'une des revendications 1 à 3, caractérisée en ce qu'en fonctionnement, la paroi (22) de la chambre d'expansion (10), tournée ver l'intérieur de la manchette (1) inclinée sous l'effet de l'expansion de la matière du bourrelet d'étanchéité (5) résultant de la compression du bourrelet constitue une surface d'application contre la surface extérieure de l'élément de tuyauterie (21) associé sous l'effet de la réaction hydraulique du fluide circulant dans la tuyauterie.

7. Garniture d'étanchéité suivant l'une des revendications 1 à 6, caractérisée en ce que chaque bourrelet d'étanchéité (5) est torique et comporte une saillie annulaire (15) de concentration d'appui du bourrelet sur l'élément de tuyauterie associé.

8. Garniture d'étanchéité suivant la revendication 7, caractérisée en ce que la saillie de concentration d'appui présente un profil en pointe (γ).

9. Garniture d'étanchéité suivant l'une des revendications 1,2 et 4, caractérisée en ce que chaque bourrelet d'étanchéité (35) comporte une lèvre annulaire (38) en saillie vers l'intérieur de la manchette, ladite chambre annulaire (41) ménagée dans la paroi intérieure de la manchette (31) formant chambre d'expansion pour la matière de la lèvre annulaire (38) lors de la compresssion du bourrelet d'étanchéité (35).

10. Garniture d'étanchéité suivant la revendication 9, caractérisée en ce que chaque lèvre (38) comporte une rampe (36a) pour faciliter l'emboîtement d'un élément de tuyauterie.

11. Garniture d'étanchéité suivant l'une des revendications 1 à 10, caractérisée en ce qu'elle comporte une nervure (2;32) tournée vers l'intérieur de la manchette, et dont les parois latérales (3;33) forment des butées de positionnement des éléments de tuyauterie à assembler.

12. Garniture d'étanchéité suivant l'une des revendications 1 à 11, caractérisée en ce qu'elle comporte à ses extrémités des collerettes (7;37) formant talons de centrage et d'accrochage pour l'enveloppe extérieure (20) du dispositif d'assemblage.

13. Dispositif d'assemblage bout à bout d'éléments de tuyauterie comprenant une enveloppe extérieure et une garniture d'étanchéité en matière élastomère destinée à être interposée entre l'enveloppe extérieure et les éléments de tuyauterie à assembler, caractérisé en ce que la garniture d'étanchéité est une garniture suivant l'une quelconque des revendications 1 à 12.
